# EUROPEAN PATENT APPLICATION

(11) **EP 0 610 162 A2**
(43) Date of publication of application: **10.08.1994**
(21) Application number: 94830027.2
(22) Date of filing: 27.01.1994
(51) Int. Cl.: B02C 19/18, B02C 17/00, B02C 23/14, B03B 9/06

(54) **Installation for the cryogenic transformation and sorting of solid municipal waste**

(30) Priority: 28.01.1993 IT FI930010
(71) Applicant: PRO.CO.GEN. PROGETTAZIONI E COSTRUZIONI GENERALI S.p.A., I-50136 Firenze (IT); PERGINE S.p.A., I-20148 Milano (IT)
(72) Inventor: Gentile, Giampiero, I-50023 Impruneta (Firenze) (IT); Andreini, Guido, I-50127 Firenze (IT); Petruzzelli, Riccardo, I-51016 Montecatini Terme (Pistoia) (IT); Bacci, Mirco, I-50126 Firenze (IT); Danielli, Rodolfo, I-20100 Milano (IT); Costa, Ugo, I-20080 Basiglo (Milano) (IT); Frati, Maurizio, I-53100 Siena (IT)
(74) Representative: Mannucci, Gianfranco, Dott.-Ing.

(57) **Abstract**

The material is made to advance inside a rotor (3) into which liquid nitrogen is sprayed to cool the material until it becomes brittle; a bar (28) inside the rotor and a mill (36) are used as means of crushing, followed by means of classified separation (42; 50; 54) of components of the said waste.

## Description

The invention relates to an installation for cryogenic destruction, cryogenic transformation, and sorting or classifying of solid municipal waste. European patent application 92830174.6 (0 511 176) describes an installation of the type mentioned above, comprising a rotor in which the material - which may have been dried, treated to remove ferromagnetic metal, and cooled - is made to advance, and into which liquid nitrogen is sprayed to cool the material until it becomes brittle; this installation also comprises means of crushing and means of classified separation of components of the said waste.

The invention concerns an installation which has been improved for an increase in throughput, for a reduction in the energy requirements of its operation, for the recovery of waste in sorted form and for other objects which will be understood from the following text.

According to the invention, at least one impact body which acts in an area in which the material is already brittle as a result of cooling, is provided in the rotor; internal appendages capable of raising, during the rotation of the rotor, any parts of the material, and also the said body, and letting it fall back on the material, are provided in the rotor. A mill for crushing the material which has been made brittle is provided after the rotor; this is followed by a series of separators to separate fractions of increasing lightness; a closed circuit of treated fluid is made to flow through the separators for transport and to prevent the aggregation of the materials.

An impact body shaped so that it can roll may be provided in the rotor. An impact body of this type in the rotor may consist of a bar with flange projections for concentrated action on the material on which the said bar falls after being raised by the rotor.

At the discharge end, the rotor may have a cap with a movable bulkhead which can uncover in a controllable way the aperture for discharge from the rotor.

The separators may advantageously be air classifiers, of the ballistic, dimensional or cyclone type, each having a feed from below for elevation by the fluid inside the closed transport circuit, and an outlet from the top to the following separator.

The separators form part of a closed pneumatic circuit having the function of impelling the crushed material through the said separators to permit separation according to the specific weights of the components. The closed circuit makes it possible to have a fluid in movement without humidity, to prevent any condensation on the components of the circuit. The pneumatic circuit is conditioned, and in particular is thermostatically kept at a suitable temperature for optimization of separation, generally, but not exclusively, at a temperature of less than 0 degrees Celsius.

Rotary traps or other equivalent mechanisms may be provided after the mill and in the bases of the separators, for the discharge of the materials without direct communication from the separators to the mill or to the outside.

The rotor can be driven in both directions of rotation, with a suitable intermittent drive.

The installation uses cryogenic fluids or mixtures of these (such as nitrogen and/or carbon dioxide), possibly with separate tubes and nozzles.

Where the materials to be treated contain excessive amounts of water or moisture, a dehumidification stage is provided and may be disposed in the homogenizing pit disposed before the cooling cylinder.

The invention will be more clearly understood from the description and the attached drawing which shows a non-restrictive practical example of the invention. In the drawing,

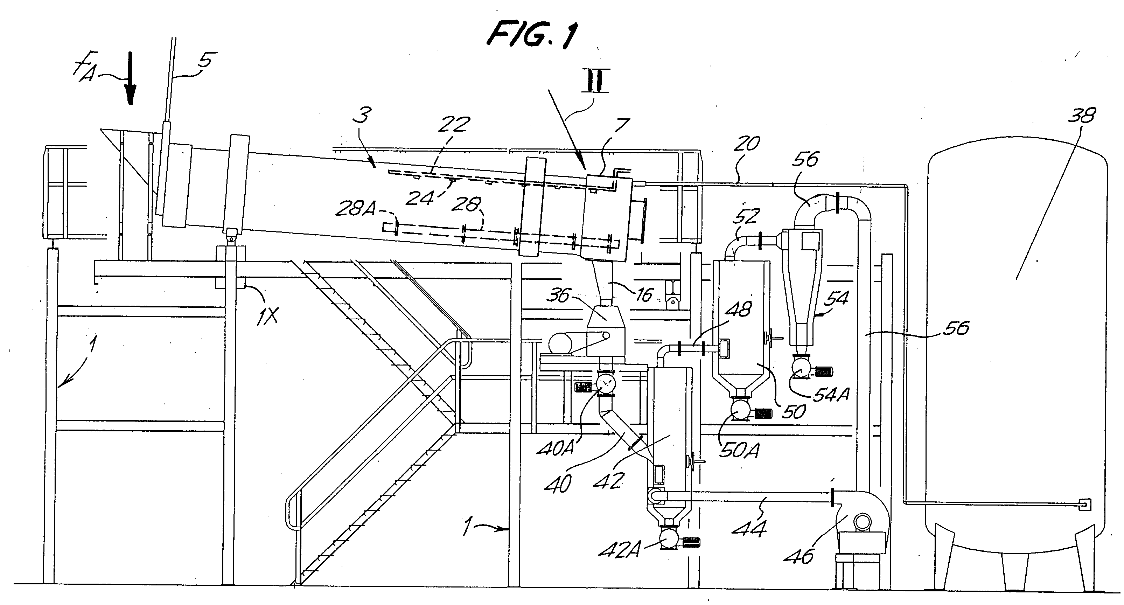

Fig. 1 is a general view of the installation;

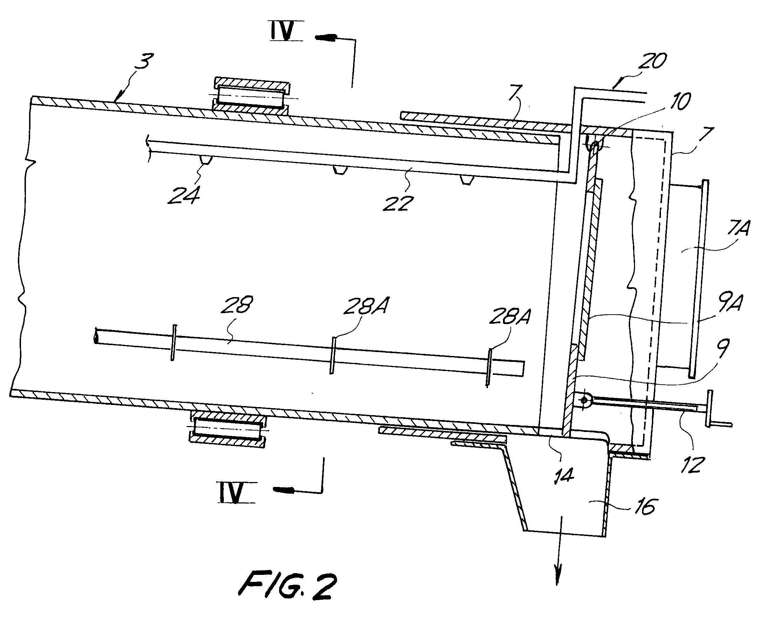

Fig. 2 shows an enlarged detail in section of the end area of the rotor as indicated by arrow II in Fig. 1;
Fig. 3 shows separately a bar-type impact body rolling inside the rotor;
Fig. 4 is a section through IV-IV in Fig. 2;
Fig. 5 is an enlarged detail of Fig. 4, indicated by arrow V of the said Fig. 4;
Fig. 6 shows an partial enlargement of Fig. 1; and

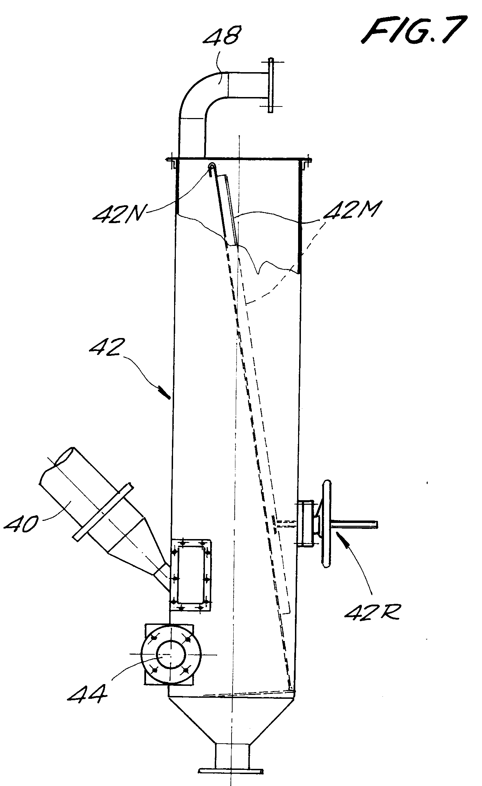

Fig. 7 shows a gravity separator from the outside and in partial section.

According to the illustrations in the attached drawing, a suitable structure 1 has disposed on it a support and rotation system for a rotor 3, which may be disposed with its axis inclined from the feed point indicated by the arrow fA to a point of discharge from the opposite and lower end of the rotor. Means which are not illustrated are used to cause the rotor to rotate about its axis, with the possibility of cyclic reversing of the rotation of the rotor according to a suitable program, in accordance with the characteristics of the material which is to be processed. The material to be treated, fed in the direction of the arrow fA, can be controlled by a suitable shutter indicated in a general way by 5, both to control the flow of the material and to permit variation of the aperture if required to match the particle size of the material to be treated. The gas emerging from the shutter 5 can be usefully applied for the pre-cooling of the incoming material, either in a special installation or in the same homogenizing vessel, and may also be used to inhibit fermentation processes. At the lower end opposite the feed end, the shell of the rotor 3 terminates inside a containing cap 7, which does not rotate and which has a bulkhead 9 hinged at 10 inside the cap 7 and capable of being adjusted with respect to its angular position by means of a crank 12, so that the lower end of the said bulkhead in the displacement can cover to a greater or lesser extent a discharge aperture 14 formed in the lower part of the cap 7 for the discharge of the material by gravity.

At least one pipe 20 for the supply of a cryogenic fluid - particularly liquid nitrogen - to a manifold 22, for the distribution of the said fluid in a spray inside and if necessary along the whole longitudinal extension of the rotor, through suitable nozzles 24, passes through the cap 7 into the rotor; the distributing manifold 22 with the nozzles 24 extends along the upper inner part of the top of the rotor, with suitable direction and suitable distribution of the nozzles for effective spraying of the cryogenic or refrigerating fluid, which is generally a liquefied gas (such as nitrogen or carbon dioxide) or a mixture of liquid gases, or with a number of separate supply systems. This fluid is sprayed or made to fall into the body of the material advanced by the rotation and inclination of the rotor 3, so that it cools the material to be treated to a sufficiently low temperature, of approximately -100°C or below, to make these materials very brittle.

Inside the rotor and in particular in the terminal part or preferably in approximately the second half of the length of the rotor, impact bodies are provided to carry out an initial crushing of the material which has been sufficiently cooled to become sufficiently brittle to be crushed by the said impact device or devices.

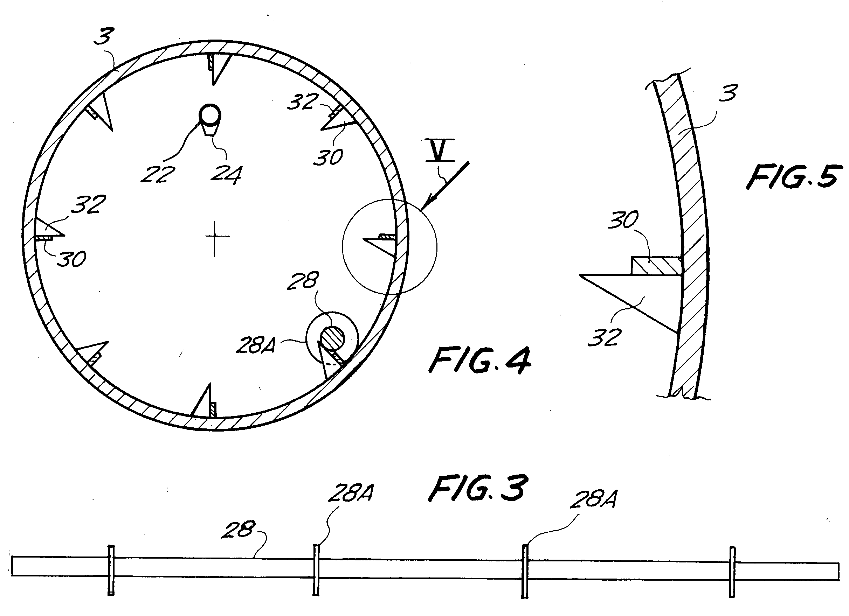

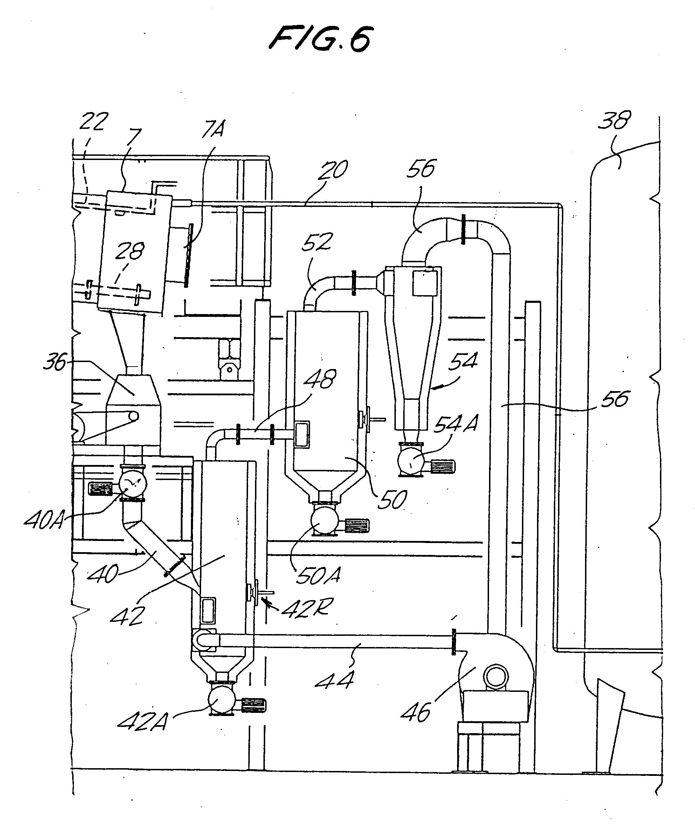

The impact bodies provided may be bodies capable of rolling, and in particular there may be provided at least one particularly heavy bar member 28, fitted with projections and, in particular, with discoidal projections 28A in the form of flanges - possibly with sharpened edges - to enable the impact effect on the material to be concentrated, when the bar 28 is raised by the rotation of the rotor and made to fall back periodically on the material which is present in the second part of the rotor and which has therefore been sufficiently cooled; if two or more bars are present, they will preferably have their discoidal projections staggered longitudinally. To raise the impact body or bodies such as the bar 28 or each bar 28 with discoidal flange projections 28A, suitable projections extend internally from the cylindrical shell of the rotor 3 and may consist of small bars or strips 30 (see in particular Figs. 4 and 5) which extend along the generatrices of the cylindrical shell of the rotor 3 at suitable distances from each other and with a mostly constant interval between them; these small bars 30 may be supported by triangular brackets 32. The small bars or strips 30 and the brackets 32 enable the bar 28 to be raised to a height at which the bar 28 spontaneously slips and falls by gravity into the lower part of the rotor containing the material, as a result of the inclination, during the rotation, of the projections which move the bar 28; the material is also partly raised during the rotation of the rotor, being engaged, in particular, by the small bars 30 and by the brackets 32 which are sharpened at their point of greatest projection; consequently, the material, made brittle by the low temperature, may be broken by the fall or may itself constitute an impact body for the material which is at that time in the lower part of the rotor and on to which these raised bodies may fall, in the same way as the bar 28 or other impact body.

It follows from this that the material consisting of solid municipal waste - fed in following sorting and removal of ferromagnetic materials and other metallic materials, and advantageously also following dehydration - undergoes a first crushing to arrive at the end of its path through the rotor at the discharge aperture 14. This aperture is more or less uncovered by the adjustable bulkhead 9, to regulate the material which is sent through the hopper 16 to a mill 36, for example a hammer mill, for subsequent further crushing of the material which arrives already roughly crushed by the impact body or bodies and by its passage through the rotor 3.

Suitable inspection systems may be provided to monitor the operation of the rotor; in particular, a hatch 7A may be provided in the cap 7 and an inspection flange or hatch 9A may be provided in the bulkhead 9.

The supports of the rotor 3 may be made with means (1X) allowing the inclination of the rotor to be adjusted according to the characteristics (which may be variable) of the waste to be treated and the desired capacity.

In the frame 1 - next to which the reservoir 38 of the cryogenic fluid, such as liquid nitrogen, is located - there are disposed in a closed circuit a number of separators, mostly gravity classifiers, each of which is individually provided with a means of regulating the speed of the carrying fluid which is suitably conditioned, mostly at a predetermined temperature generally below 0°C, and which is supplied in a closed circuit from a propulsive means of the fan or other type; the material is kept at a low temperature so that the water present in solid municipal waste is kept in the form of ice and adhesion between the particles is consequently prevented. The carrying fluid is advantageously free of moisture to prevent condensation and to ensure that the particles do not tend to agglomerate. A duct 40 leads from the mill 36 to a first classifier 42, in the lower part of which the duct 40 emerges; this duct has a rotary trap 40A - or other systems suitable for extracting the material without contact with the outside - to discharge the material finely crushed by the mill 36 for feeding to the said first classifier 42. A carrying fluid is fed to the classifier 42 from a duct 44 leading from a propulsive means 46, which may be a fan operating in closed circuit; the carrying fluid may be cooled by suitable continuous or intermittent injection of a cryogenic fluid. The duct 44 emerges in the lower part of the classifier 42, and the carrying fluid raises the lighter material to a transfer duct 48, while the heavier parts are collected in the base of the classifier 42 and are periodically discharged, for example by means of a rotary trap 42A. The duct 48 runs to the lower part of a second classifier 50 of the same shape as 42 and fitted with a rotary trap 50A for the discharge of the heavier parts of the material which arrives through the duct 48; these parts may be lighter plastics or other materials. 52 indicates the outlet duct leading from the upper part of the classifier 50 to a third classifier 54, which may be of the cyclone type for the recovery of the lighter parts, for example paper, through a bottom rotary trap 54A, while the carrying fluid from the third classifier 54 is returned along a duct 56 to the fan or other propulsive means 46, and may advantageously pass through a cooling system which may be combined with the refrigeration system for the cryogenic fluid which is fed to the rotor 3.

One or more of the classifiers, such as 42 and 50, may be adjustable to permit the regulation of the sorting capacity. Fig. 6 shows an adjustable classifier, such as 42. A wall 42M is provided inside the parallelepipedal casing of the classifier, is hinged at 42N and can be adjusted with respect to its angular position by means of a system 42R, for example of the type consisting of a handwheel and threaded rod. By adjusting the movable wall 42M, it is possible to vary the specific sorting capacity.

By means of its regulating mechanisms, the system can be used to extract any material from any of the outlets, and ideally
1) metals and inert substances from 42A;
2) heavy plastics and organic substances from 50A;
3) light plastics, paper, and other substances from 54A.

A filter may also be advantageously provided in the classifier circuit and after the classifiers, to prevent the recycling of any particles carried; the filter (or trap) can be emptied periodically, and may also be activated intermittently.

A gravity, ballistic, or dimensional separator may be installed in series with the outlet rotary traps, at a temperature below 0°C, for further sorting.

Suitable thermal insulation systems will be used to provide maximum energy savings, avoiding the dispersion of refrigerating units outside the components of the installation.

The installation may be controlled by means of a suitable panel which enables the regular flow of the cryogenic fluid to be controlled as a function of the temperatures reached at the characteristic points of the installation; these temperatures may be measured by suitable sensors. The panel may permit the starting of the motors for the various circulations and the various movements and for the control of the rotary traps of the separators, for the operation of the crusher, and other purposes. Control of the pressures and speeds of fluids may also be provided, as well as a system of controlling the amount of solid municipal waste to be processed, as a function of various factors, including those relating to the temporary characteristics of the said solid municipal waste.

It is to be understood that the drawing shows only an example provided solely as a practical demonstration of the invention, and that this invention may be varied in its forms and dispositions without departure from the scope of the guiding concept of the invention. The presence of any reference numbers in the enclosed claims has the purpose of facilitating the reading of the claims- with reference to the description and to the drawing, and does not limit the scope of protection represented by the claims.

## Claims

1. Installation for the cryogenic transformation and sorting of solid municipal waste, comprising a rotor (3) in which the material - dried (in heat, in cold or in a vacuum) and treated to remove ferromagnetic metal if necessary - is made to advance, and into which a cryogenic fluid, such as liquid nitrogen and/or carbon dioxide or other, is fed to cool the material until it becomes brittle, and also comprising means of crushing and means of classified separation of components of the said waste, characterized in that at least one impact body (28), which acts in an area in which the material has already been made brittle by cooling, is provided in the rotor (3); in that internal appendages (30, 32) capable of raising, during the rotation of the rotor, any parts of the material, and also the said impact body or bodies (28), and letting them fall back on the material, are provided in the rotor; in that a series of separators or classifiers (42, 50, 54) for fractions of increasing lightness are provided after the rotor (3) and after a mill (36) for crushing the material which has been made brittle; and in that a closed circuit (44, 52, 56, 46) is provided through the separators for transport and for maintaining a suitably controlled temperature.

2. Installation according to Claim 1, characterized in that one impact body in the rotor is shaped so that it can roll.

3. Installation according to Claim 1 or 2, characterized in that one impact body in the rotor consists of a bar (28) with flange projections (28A) for concentrated action on the material on which the said bar (28) falls after being raised by the rotor.

4. Installation according to Claim 1 or 2, characterized in that the rotor has at the discharge end a movable bulkhead (9), which can uncover in a controllable way the aperture (14) for discharge from the rotor; the said bulkhead and the said aperture being provided in a cap (7) fitted on the end of the rotor.

5. Installation according to Claim 1, characterized in that the closed circuit is operated with fluid, in particular air, conditioned to keep it free of moisture and at relatively low temperatures.

6. Installation according to Claim 1 or 5, characterized in that the separators (42, 50, 54) comprise air cyclones and/or classifiers of the ballistic, dimensional, or other type, having a feed from below and an outlet from the top to the following separator.

7. Installation according to Claim 6, characterized in that rotary traps (40A, 42, 50A, 54A) or equivalent mechanisms are provided after the mill (36) and in combination with the separators (42, 50, 54) and can intermittently discharge the materials without direct communication from the separators to the mill or to the outside.

8. Installatiun according to one of Claims 1 to 3, characterized in that the rotor can be driven in both directions of rotation.

9. Installation according to at least one of the preceding claims, characterized in that the rotor is supported by means (1X) allowing a variation of the inclination of its axis.

10. Installation according to at least some of the preceding claims, characterized in that at least one of the separators or classifiers (42, 50) comprises regulating means (42M) for the variation of the sorting capacity.

11. Installation according to at least one of the preceding claims, characterized in that it is associated with preceding means capable of using the cryogenic fluid which may leak from the inlet of the rotor, for precooling of the material to be treated and for any necessary control of fermentation processes.
